# EUROPEAN PATENT SPECIFICATION

(11) **EP 3 640 782 B1**
(45) Date of publication and mention of the grant of the patent: **31.07.2024**
(21) Application number: 17919724.9
(22) Date of filing: 03.08.2017
(51) Int. Cl.: G06F 3/04883, G06F 3/04886

(54) **ANTI-MISOPERATION METHOD AND TERMINAL**
ANTIFEHLFUNKTIONSVERFAHREN UND ENDGERÄT
PROCÉDÉ ET TERMINAL ÉVITANT LES ERREURS DE MANIPULATION

(43) Date of publication of application: 22.04.2020
(73) Proprietor: Huawei Technologies Co., Ltd., Longgang District Shenzhen, Guangdong 518129 (CN)
(72) Inventor: CHEN, Xiaoxiao, Shenzhen Guangdong 518129 (CN); HUANG, Dezhi, Shenzhen Guangdong 518129 (CN); CHEN, Hao, Shenzhen Guangdong 518129 (CN); LI, Tangsuo, Shenzhen Guangdong 518129 (CN)
(74) Representative: Gill Jennings & Every LLP
(86) International application number: PCT/CN2017/095876
(87) International publication number: WO 2019/024056

(56) References cited:
- EP-A1- 3 128 409
- EP-A2- 2 770 421
- CN-A- 104 699 392
- CN-A- 106 598 249
- CN-A- 106 708 263
- CN-A- 106 708 407
- CN-A- 106 814 854
- US-A1- 2010 321 323

## Description

### TECHNICAL FIELD

The embodiments of this application relate to the field of communications technologies, and in particular, to an anti-accidental touch method and a terminal.

### BACKGROUND

A screen-to-body ratio refers to a ratio of an area of a display screen that is included in a mobile terminal such as a mobile phone to an area of a front panel of the terminal. When the screen-to-body ratio is higher, an effective display area of the terminal is larger and a user obtains a better display effect. Therefore, terminals with high screen-to-body ratios are more popular among users.

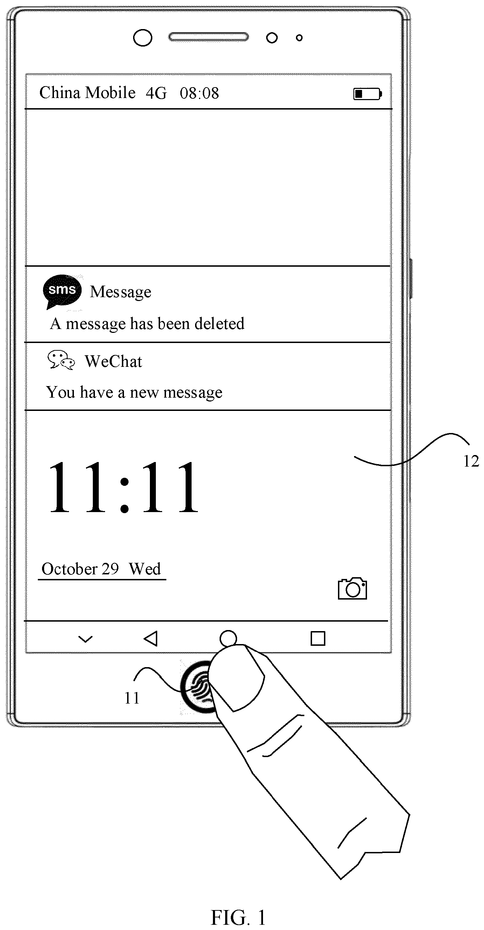

However, when the screen-to-body ratio of the terminal is higher, remaining space of the front panel of the terminal except the display screen is smaller. Consequently, as is shown in FIG. 1, a spacing between a fingerprint collection component 11 and a display screen 12 that are disposed on the front panel of the terminal is smaller. In this way, an operation performed by a user on the display screen 12 and an operation performed by the user on the fingerprint collection component 11 may interfere with each other, leading to an accidental touch operation.

For example, when the terminal runs a game application, the user may control a game character to walk by performing a dragging operation on the display screen 12. Still as shown in FIG. 1, because the fingerprint collection component 11 and the display screen 12 are very close to each other, a finger of the user may accidentally drag the game character to the fingerprint collection component 11 that is outside the display screen 12. In this case, the fingerprint collection component 11 detects the user's operation and determines that the user performs a tap operation on the fingerprint collection component 11. Consequently, in response to the tap operation, the terminal returns to a desktop state, and the running game application of the terminal is interrupted.

EP2770421 A2 and EP3128409A1 both relate to electronic devices having a touch-sensitive user interface and related operating methods.

### SUMMARY

The embodiments of this application provide an anti-accidental touch method and a terminal and can reduce a risk of an accidental touch operation and improve execution efficiency of a touch operation when a user operates on a display screen or a fingerprint collection component.

Various aspects of the present disclosure have been defined in the independent claims. Further technical features of each of these aspects have been defined in the respective dependent claims.

Various principles described in the present disclosure improve accuracy of the terminal to identify the accidental touch operation.

### BRIEF DESCRIPTION OF DRAWINGS

FIG. 1 is a schematic diagram of an application scenario in which an accidental touch operation is performed in the prior art;
FIG. 2 is a schematic structural diagram 1 of a terminal according to an embodiment of this application;
FIG. 3 is a schematic flowchart 1 of an anti-accidental touch method according to an embodiment of this application;
FIG. 4A is a schematic diagram 1 of an application scenario of the anti-accidental touch method according to this embodiment of this application;
FIG. 4B is a schematic diagram 2 of an application scenario of the anti-accidental touch method according to this embodiment of this application;
FIG. 5 is a schematic diagram 3 of an application scenario of the anti-accidental touch method according to this embodiment of this application;
FIG. 6 is a schematic diagram 4 of an application scenario of the anti-accidental touch method according to this embodiment of this application;
FIG. 7 is a schematic diagram 5 of an application scenario of the anti-accidental touch method according to this embodiment of this application;
FIG. 8 is a schematic diagram 6 of an application scenario of the anti-accidental touch method according to this embodiment of this application;
FIG. 9 is a schematic diagram 7 of an application scenario of the anti-accidental touch method according to this embodiment of this application;
FIG. 10 is a schematic diagram 8 of an application scenario of the anti-accidental touch method according to this embodiment of this application;
FIG. 11 is a schematic diagram 9 of an application scenario of the anti-accidental touch method according to this embodiment of this application;
FIG. 12 is a schematic diagram 10 of an application scenario of the anti-accidental touch method according to this embodiment of this application;
FIG. 13 is a schematic diagram 11 of an application scenario of the anti-accidental touch method according to this embodiment of this application;
FIG. 14 is a schematic diagram 12 of an application scenario of the anti-accidental touch method according to this embodiment of this application;
FIG. 15 is a schematic flowchart 2 of an anti-accidental touch method according to an embodiment of this application;
FIG. 16 is a schematic diagram 13 of an application scenario of the anti-accidental touch method according to this embodiment of this application;
FIG. 17 is a schematic flowchart 3 of an anti-accidental touch method according to an embodiment of this application;
FIG. 18 is a schematic diagram 14 of an application scenario of the anti-accidental touch method according to this embodiment of this application;
FIG. 19 is a schematic diagram 15 of an application scenario of the anti-accidental touch method according to this embodiment of this application;
FIG. 20 is a schematic structural diagram 2 of a terminal according to an embodiment of this application; and
FIG. 21 is a schematic structural diagram 3 of a terminal according to an embodiment of this application;

### DESCRIPTION OF EMBODIMENTS

The implementations described below are not all claimed, they are included to help understanding the context of the invention. While the description often refers to embodiments, the embodiments of the invention are those which comprise at least all the features of an independent claim. Any embodiment which does not fall within the scope of the claims does not form part of the invention, but rather included as an illustrative example that is useful for understanding the invention.
The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the description of the embodiments of this application, unless otherwise stated, "multiple" means two or more than two.

An anti-accidental touch method according to an embodiment of this application can be applied to a mobile phone, a wearable device, an augmented reality (AR)/virtual reality (VR) device, a tablet computer, a notebook computer, an ultra-mobile personal computer (UMPC), a netbook, a personal digital assistant (PDA), or any other terminal. Certainly, in the following embodiments, no limitation is imposed on a specific form of the terminal.

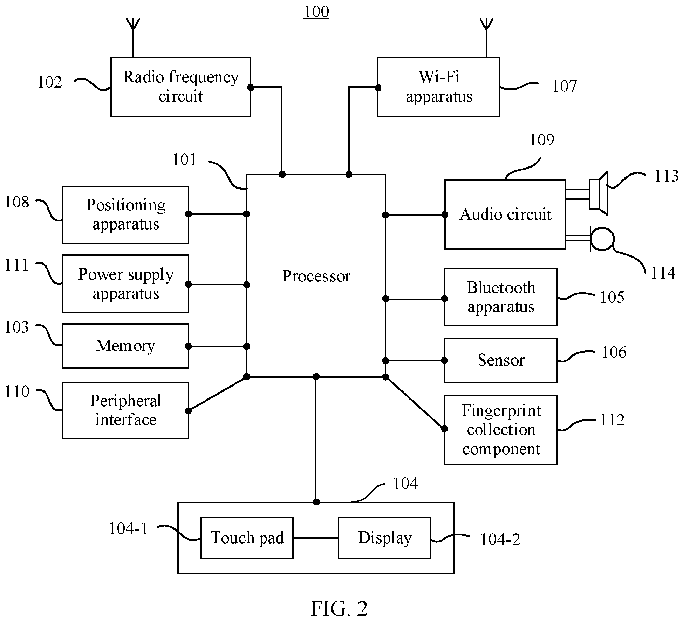

As shown in FIG. 2, a terminal in this embodiment of this application may be a mobile phone 100. The mobile phone 100 is used as an example below to describe this embodiment in detail. It should be understood that the mobile phone 100 shown in the figure is only an example of the terminal, and the mobile phone 100 may include more or fewer parts than those shown in the figure, may combine two or more parts, or may have different part configurations.

As shown in FIG. 2, the mobile phone 100 may specifically include parts such as a processor 101, a radio frequency (RF) circuit 102, a memory 103, a touchscreen 104, a Bluetooth apparatus 105, one or more sensors 106, a Wi-Fi apparatus 107, a positioning apparatus 108, an audio circuit 109, a peripheral interface 110, and a power supply system 111. These parts may communicate with each other by using one or more communications buses or signal lines (not shown in FIG. 2). A person skilled in the art may understand that a hardware structure shown in FIG. 2 does not constitute a limitation on the mobile phone, and the mobile phone 100 may include more or fewer parts than those shown in the figure, or some parts may be combined, or different parts may be disposed.

The parts of the mobile phone 100 are described in detail below with reference to FIG. 2.

The processor 101 is a control center of the mobile phone 100. The processor 101 connects all parts of the mobile phone 100 by using various interfaces and lines, and executes various functions of the mobile phone 100 and processes data by running or executing an application program stored in the memory 103 and invoking data stored in the memory 103. In some embodiments, the processor 101 may include one or more processing units. For example, the processor 101 may be a Kirin 960 chip fabricated by Huawei Technologies Co., Ltd. In some embodiments of this application, the processor 101 may further include a fingerprint verification chip configured to verify a collected fingerprint.

The radio frequency circuit 102 may be configured to receive and send a radio signal during information receiving/sending or a call. In particular, the radio frequency circuit 102 may receive downlink data of a base station and then deliver the downlink data to the processor 101 for processing. In addition, the radio frequency circuit 102 sends uplink-related data to the base station. Usually, the radio frequency circuit includes, but is not limited to, an antenna, at least one amplifier, a transceiver, a coupler, a low noise amplifier, and a duplexer. In addition, the radio frequency circuit 102 may further communicate with another device by using radio communications. The radio communications may use any communication standard or protocol, which includes, but is not limited to, global system for mobile communications, a general packet radio service, code division multiple access, wideband code division multiple access, long term evolution, an email, and a short message service.

The memory 103 is configured to store an application program and data. The processor 101 executes various functions of the mobile phone 100 and data processing by running the application program and the data that are stored in the memory 103. The memory 103 mainly includes a program storage area and a data storage area. The program storage area may store an operating system, an application program required by at least one function (such as a sound playing function or an image playing function). The data storage area may store data (such as audio data or a phone book) created when the mobile phone 100 is used. In addition, the memory 103 may include a high-speed random access memory, and may further include a non-volatile memory such as a magnetic disk storage device or a flash memory device, or another volatile solid storage device. The memory 103 may store various operating systems, for example, an iOS^{®} operating system developed by Apple Inc. and an Android^{®} operating system developed by Google Inc. The memory 103 may be independent and is connected to the processor 101 by the communications bus; the memory 103 may also be integrated with the processor 101.

The touchscreen 104 may specifically include a touch pad 104-1 and a display 104-2.

The touch pad 104-1 may collect a touch event (for example, an operation performed on the touch pad 104-1 or around the touch pad 104-1 by a user by using a finger, a stylus, or another suitable object) that is of the user of the mobile phone 100 and that is on or around touch pad 104-1, and send collected touch information to another component (for example, the processor 101). The touch event of the user around the touch pad 104-1 may be referred to as a hover touch. The hover touch may refer to that the user does not need to directly contact the touch pad to select, move, or drag a target (for example, an icon), and can execute a desired function as long as the user is close to the terminal. In an application scenario of the hover touch, terms such as "touch" and "contact" do not implicate direct contact with the touchscreen, but implicate nearby or close contact with the touchscreen. The touch pad 104-1 on which the hover touch can be performed may be implemented by using a capacitive type, infrared light sensing, an ultrasonic wave, or the like. In addition, the touch pad 104-1 may be implemented by using a plurality of types such as resistive, capacitive, infrared, and surface acoustic wave.

The display (which is also referred to as a display screen) 104-2 may be configured to display information input by the user or information provided for the user, and various menus of the mobile phone 100. The display 104-2 may be configured by using a liquid crystal display, an organic light-emitting diode, or the like. The touch pad 104-1 may cover the display 104-2. When the touch pad 104-1 detects the touch event on or around the touch pad 104-1, the touch event is transmitted to the processor 101 to determine a type of the touch event. Then, the processor 101 may then provide corresponding visual output on the display 104-2 based on the type of the touch event. In FIG. 2, the touch pad 104-1 and the display 104-2 implement input and output functions of the mobile phone 100 as two independent parts. However, in some embodiments, the input and output functions of the mobile phone 100 may be implemented by integrating the touch pad 104-1 and the display 104-2. It may be understood that the touchscreen 104 is formed by stacking layers of materials. In this embodiment of this application, only the touch pad (layer) and the display screen (layer) are shown, and other layers are not described. Moreover, in some other embodiments of this application, the touch pad 104-1 may cover the display 104-2, and a size of the touch pad 104-1 is greater than a size of the display 104-2, so that the display 104-2 is completely covered by the touch pad 104-1. Alternatively, the touch pad 104-1 may be disposed on the front of the mobile phone 100 in a full panel form, that is, all touches of the user on the front of the mobile phone 100 can be sensed by the mobile phone. In this way, full touch experience on the front of the mobile phone can be implemented. In some other embodiments, the touch pad 104-1 is disposed on the front of the mobile phone 100 in the full panel form, and the display 104-2 may also be disposed on the front of the mobile phone 100 in the full panel form, so that a bezel-less structure can be implemented on the front of the mobile phone.

In addition, the mobile phone 100 may further include a fingerprint recognition function. For example, a fingerprint collection component 112 may be disposed on the back (for example, below a rear-facing camera) of the mobile phone 100, or the fingerprint collection component 112 may be disposed on the front (for example, below the touchscreen 104) of the mobile phone 100. For another example, the fingerprint collection component 112 may be disposed on the touchscreen 104 to implement the fingerprint recognition function, that is, the fingerprint collection component 112 may be integrated with the touchscreen 104 to implement the fingerprint recognition function of the mobile phone 100. In this case, the fingerprint collection component 112 is disposed on the touchscreen 104, and may be a part of the touchscreen 104, or may be disposed on the touchscreen 104 in another form. A main part of the fingerprint collection component 112 in this embodiment of this application is a fingerprint sensor, where the fingerprint sensor may use any type of sensing technologies, including but not limited to, optical, capacitive, piezoelectric, or ultrasonic wave sensing technologies.

When the fingerprint collection component 112 is disposed below the touchscreen 104, a touch operation performed by the user on the touchscreen 104 and a touch operation that is performed by the user on the fingerprint collection component 112 may interfere with each other, which causes an accidental touch operation. For example, the user accidentally touches the touchscreen 104 when pressing a fingerprint on the fingerprint collection component 112, and the mobile phone 100 determines by mistake that the user performs a tap operation on the touchscreen 104; or the user accidentally contacts the fingerprint collection component 112 when sliding downward on the touchscreen 104, and the mobile phone 100 determines by mistake that the user performs a tap operation on the fingerprint collection component 112.

Therefore, in this embodiment of this application, when the user not only touches the touchscreen 104 but also touches the fingerprint collection component 112 during an operation, the mobile phone 100 may determine whether a fingerprint touch event and a fingerprint touch event is an accidental touch operation with reference to a touch time and a touch position in the screen touch event that occurs on the touchscreen 104 and a touch time and a touch position in the fingerprint touch event that occurs on the fingerprint collection component 112. If there is an accidental touch operation, the mobile phone 100 may further shield the accidental touch operation. For example, when the accidental touch operation is the fingerprint touch event, the terminal may shield the fingerprint touch event and execute the screen touch event; when the accidental touch operation is the screen touch event, the terminal may shield the screen touch event and execute the fingerprint touch event. Therefore, a risk of an accidental touch operation that occurs when the user operates on the touchscreen or the fingerprint collection component is reduced, and the terminal can perform the touch operation that the user intends to perform as far as possible, improving execution efficiency of the touch operation.

It should be noted that except the fingerprint touch event that occurs on the fingerprint collection component 112, the anti-accidental touch method in this embodiment of this application may further be applied to a key touch event that occurs on another key, for example, a key touch event that occurs on a return key, or a key touch event that occurs on a HOME key. Each key may be a material physical key, or may be a virtual functional key, which is not limited in this embodiment of this application. The following embodiments merely use the fingerprint touch event that occurs on the fingerprint collection component 112 as an example.

That is, the anti-accidental touch method in this embodiment of this application may determine whether an accidental touch operation is performed based on a touch parameter to shield the accidental touch operation, and perform the user's desirable touch operation, when the terminal not only obtains the screen touch event on the touchscreen but also obtains the key touch event on a target key (for example, the foregoing fingerprint collection component 112).

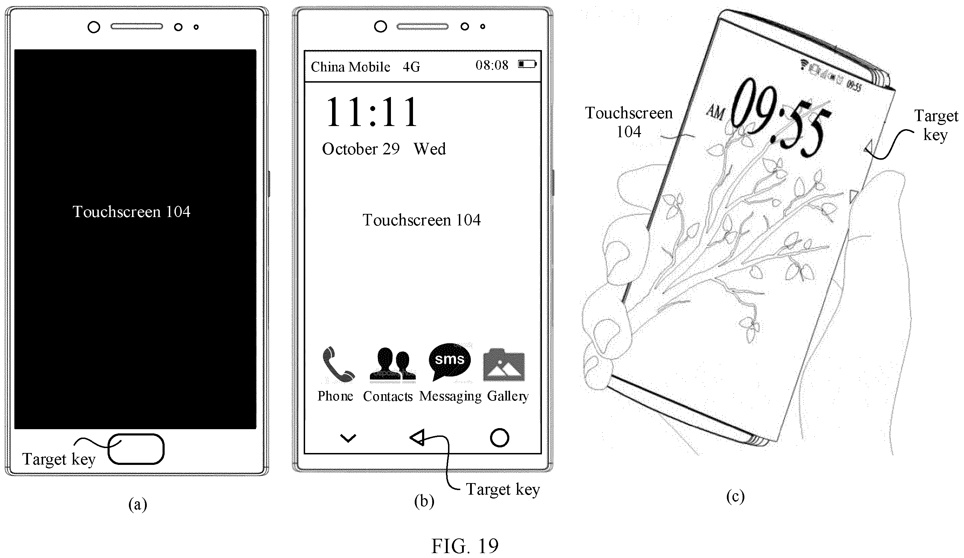

The target key and the touchscreen 104 may be disposed next to each other, that is, the target key is disposed in a preset area around the touchscreen 104. For example, as shown in (a) of FIG. 19, the target key and the touchscreen 104 are both disposed on a front panel of the mobile phone 100, and a distance between the target key and the touchscreen 104 is less than a preset value; or as shown in (b) of FIG. 19, the target key may be a key on the touchscreen 104, for example, the return key; or as shown in (c) of FIG. 19, the target key may further be a key disposed on a side edge of the mobile phone 100, and the touchscreen 104 may be a curved screen or may be a non-curved screen. This is not limited in this embodiment of this application.

The mobile phone 100 may further include the Bluetooth apparatus 105, configured to implement data exchange between the mobile phone 100 and another terminal (for example, a mobile phone or a smartwatch) within a short distance. The Bluetooth apparatus in this embodiment of this application may be an integrated circuit or a Bluetooth chip or the like.

The mobile phone 100 may further include at least one type of sensor 106, such as an optical sensor, a motion sensor, or another sensor. Specifically, the optical sensor may include an ambient light sensor and a proximity sensor. The ambient light sensor can adjust brightness of the display of the touchscreen 104 based on brightness of ambient light, and the proximity sensor can turn off a power supply of the display when the mobile phone 100 is moved to an ear. As one type of motion sensor, an acceleration sensor may detect magnitude of accelerations in various directions (generally on three axes), may detect magnitude and a direction of gravity when the mobile phone is static, and may be applied to an application for identifying a mobile phone posture (such as landscape-to-portrait switch, a related game, or magnetometer posture calibration), a function related to vibration recognition (such as a pedometer or a knock), and the like. Other sensors such as a gyroscope, a barometer, a hygrometer, a thermometer, and an infrared sensor may be configured in the mobile phone 100. Details are not described herein again.

The Wi-Fi apparatus 107 is configured to provide network access that complies with a Wi-Fi-related standard protocol for the mobile phone 100. The mobile phone 100 may access a Wi-Fi access point by using the Wi-Fi apparatus 107, so that the user can receive and send emails, browse web pages, and access streaming media. The Wi-Fi apparatus 107 provides wireless broadband Internet access for the user. In some other embodiments, the Wi-Fi apparatus 107 may also be a Wi-Fi wireless access point, to provide the Wi-Fi network access for another terminal.

The positioning apparatus 108 is configured to provide a geographical position for the mobile phone 100. It may be understood that the positioning apparatus 108 may specifically be a receiver of a positioning system such as the global positioning system (GPS), the BeiDou navigation satellite system, or the Russian GLONASS. After receiving a geographical position sent by the positioning system, the positioning apparatus 108 sends information to the processor 101 for processing, or sends the information to the memory 103 for storage. In some other embodiments, the positioning apparatus 108 may further be a receiver of the Assisted Global Positioning System (AGPS), and the AGPS system assists the positioning apparatus 108 in completing ranging and positioning services as an assisted server. In this case, the assisted positioning server provides positioning assistance by communicating with the positioning apparatus 108 (namely, a receiver of the GPS) of the terminal such as the mobile phone 100 through a wireless communications network. In some other embodiments, the positioning apparatus 108 may also be a positioning technology based on the Wi-Fi access point. Because each Wi-Fi access point includes a globally unique MAC address, a terminal may scan and collect a broadcast signal of a nearby Wi-Fi access point when Wi-Fi is turned on, and therefore the terminal may obtain a MAC address broadcast by the Wi-Fi access point. The terminal sends data (such as the MAC address) that can indicate the Wi-Fi access point to a location server through the wireless communications network. The location server retrieves a geographic location of each Wi-Fi access point, calculates a geographic location of the terminal with reference to strength of the Wi-Fi broadcast signal, and sends the geographic location to the positioning apparatus 108.

The audio circuit 109, a speaker 113, and a microphone 114 may provide an audio interface between the user and the mobile phone 100. The audio frequency circuit 109 may convert received audio data into an electrical signal and transmit the electrical signal to the speaker 113. The speaker 113 converts the electrical signal into a sound signal for output. In addition, the microphone 114 converts the collected sound signal into an electrical signal. The audio frequency circuit 109 receives the electrical signal, converts the electrical signal into audio data, and then outputs the audio data to the RF circuit 102 to send the audio data to, for example, another mobile phone, or outputs the audio data to the memory 103 for further processing.

The peripheral interface 110 is configured to provide various interfaces for external input/output devices (such as a keyboard, a mouse, an external display, an external memory, and a subscriber identity module). For example, the mouse is connected by using a universal serial bus (USB) interface, and a subscriber identity module (SIM) card provided by a telecommunications operator is connected by using a metal contact on a subscriber identity module slot. The peripheral interface 110 may be configured to couple the external input/output peripheral devices to the processor 101 and the memory 103.

The mobile phone 100 may further include a power supply apparatus 111 (for example, a battery and a power management chip) for supplying power to the parts. The battery may be logically connected to the processor 101 by using the power management chip, thereby implementing functions such as charging, discharging, and power consumption management by using the power supply apparatus 111.

The mobile phone 100 may further include a camera (a front-facing camera and/or a rear-facing camera), a flash, a micro projection apparatus, a near-field communication (NFC) apparatus, and the like, which are not shown in FIG. 2. Details are not described herein.

For clarity of description of the anti-accidental touch method in this embodiment of this application, in the following embodiments, the touch operation detected on the touchscreen 104 is referred to as the screen touch event, and the touch operation detected on the fingerprint collection component 112 is referred to as the fingerprint touch event, where the fingerprint touch event may include a fingerprint that is collected after the user touches the fingerprint collection component 112, and/or a gesture formed by the user's touch on the fingerprint collection component 112. Moreover, the touch operation herein may specifically be a slide operation, a tap operation, a press operation, a long press operation, or the like, which is not limited in this embodiment of this application.

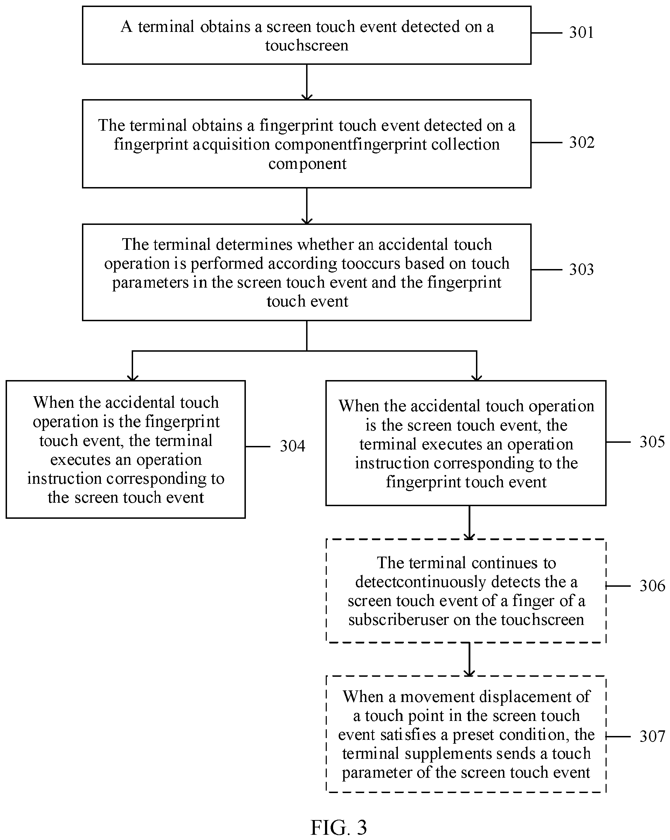

The following describes an anti-accidental touch method according to an embodiment of this application in detail with reference to a specific embodiment. As shown in FIG. 3, the method includes the following steps.

301. A terminal obtains a screen touch event detected on a touchscreen.

Specifically, the terminal may scan an electrical signal on the touchscreen in real time at a frequency. When a user performs a touch operation such as a slide or tap on the touchscreen, due to an effect of a human body electric field, the touchscreen may detect that one or more electrical signals in a touch position change, so that the terminal may determine that the screen touch event occurs on the touchscreen.

The screen touch event includes a group of touch positions and touch times, that is, a touch position and a touch time that are detected during a time period from a time when a user's finger touches the touchscreen to a time when the user's finger is lifted from the touchscreen.

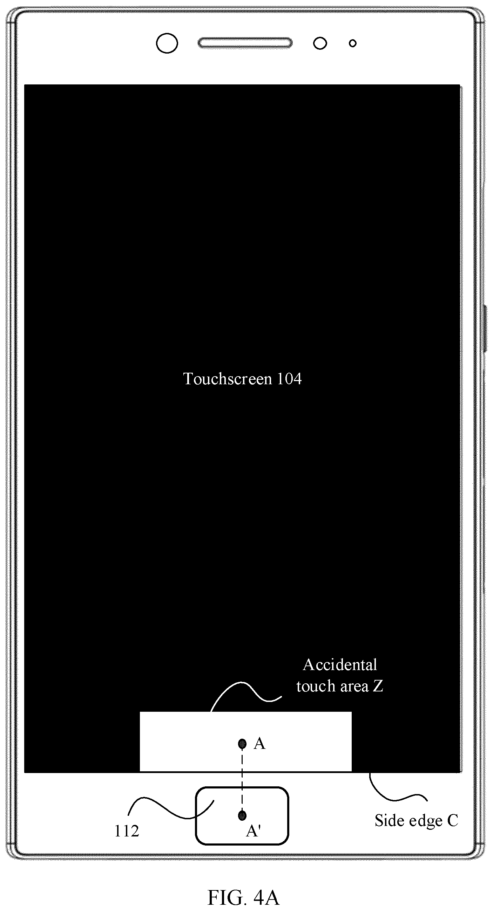

In some embodiments of this application, as shown in FIG. 4A, an accidental touch area Z may be preset on a side edge C that is close to the fingerprint collection component 112 in the touchscreen 104. The accidental touch area Z is close to the fingerprint collection component 112. Therefore, regardless of whether the touchscreen 104 is accidentally touched during an operation on the fingerprint collection component 112 or the fingerprint collection component 112 is accidentally touched during an operation on the touchscreen 104, it is probable that the accidental touch area Z is accidentally touched, that is, a probability of a misoperation in the accidental touch area Z is high.

In this way, when the screen touch event obtained by the terminal includes a touch point in the accidental touch area Z, the terminal may be triggered to execute an anti-accidental touch method according to steps 302 to 307 that are described below; otherwise, it may be determined that a probability of an accidental touch in the screen touch event currently triggered by the user is rather low, and there is no need to execute the following anti-accidental touch method, reducing power consumption of the running terminal.

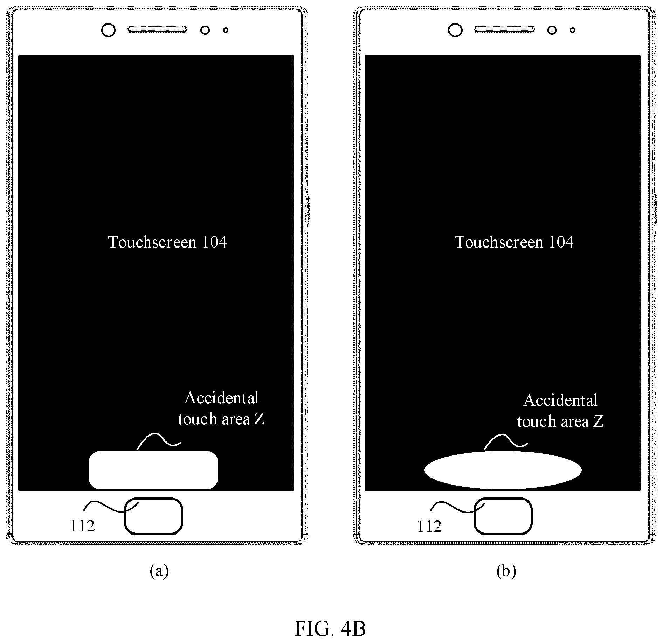

For example, still as shown in FIG. 4A, a line between a central position A of the accidental touch area Z and a central position A' of the fingerprint collection component 112 may be perpendicular to or approximately perpendicular to the side edge C. Moreover, the accidental touch area Z may be any shape such as a quadrate, a circle, a round rectangle (as shown in (a) of FIG. 4B), or an oval (as shown in (b) of FIG. 4B), which is not limited in this embodiment of this application.

It may be understood that the terminal may further adjust a position and a size of the accidental touch area Z based on a specific application scenario or a touch habit of the user, which is not limited in this embodiment of this application.

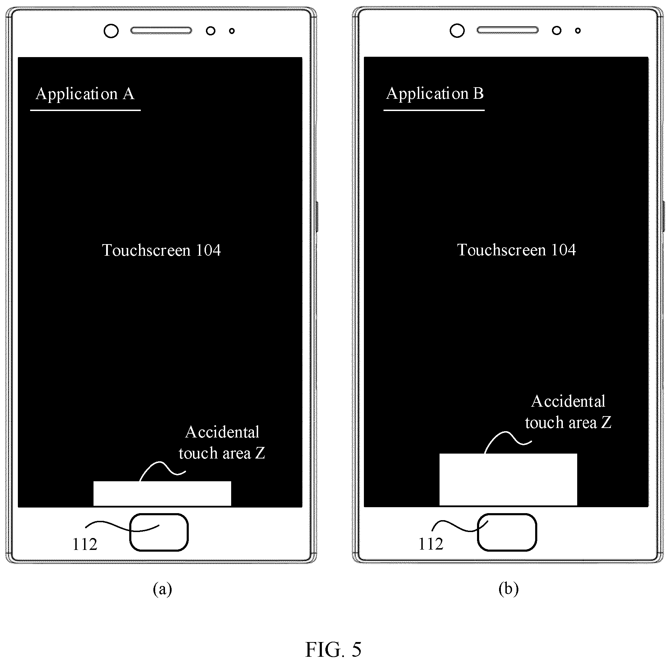

For example, as shown in (a) of FIG. 5, when the terminal runs an application A with fewer touch operations and a low probability of accidental touch operation such as a video player, the size of the accidental touch area Z may be reduced, so that additional power consumption due to accidental touch identification is reduced. When the terminal runs an application B with more touch operations and a high probability of accidental touch operation such as a game, as shown in (b) of FIG. 5, the size of the accidental touch area may be increased to improve accuracy of the terminal to identify the accidental touch operation.

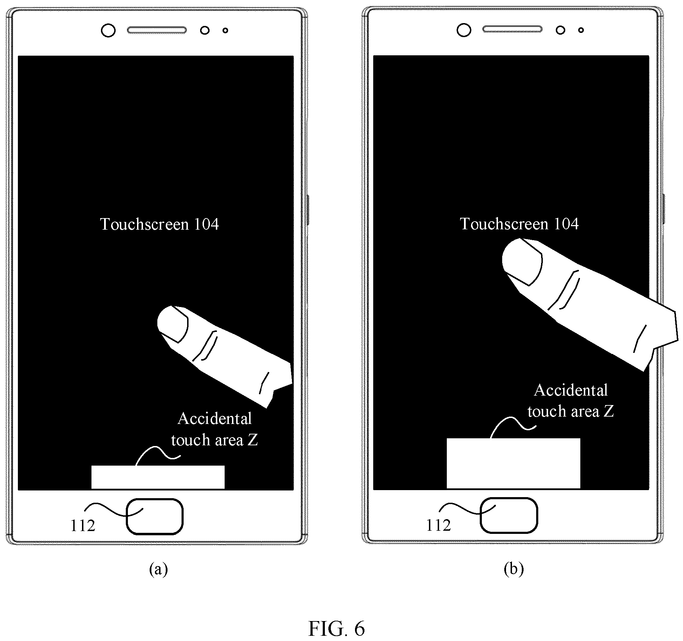

For another example, when a hand size of the user is small, and the terminal detects that a contact area where the finger of the user touches the touchscreen 104 is small, a size of an area in which a misoperation occurs when a touch operation is performed on the touchscreen 104 by the finger is small. Therefore, as shown in (a) of FIG. 6, the size of the accidental touch area Z may be reduced, and additional power consumption due to accidental touch identification is reduced. When the hand size of the user is small, and the terminal detects that the contact area where the user touches the touchscreen 104 by using the finger is large, the size of the area in which a misoperation occurs when the touch operation is performed on the touchscreen 104 by the finger is correspondingly large. Therefore, as shown in (b) of FIG. 6, the size of the accidental touch area Z is increased to improve the accuracy of the terminal to identify the accidental touch operation.

302. The terminal obtains a fingerprint touch event detected on a fingerprint collection component
Similar to the screen touch event, the terminal may scan an electrical signal on the fingerprint collection component at a frequency. When the user performs a touch operation such as a slide or tap operation on the fingerprint collection component, the fingerprint collection component may detect that one or more electrical signals in a touch position change, so that the terminal may determine that the fingerprint touch event occurs on the fingerprint collection component.

Likewise, the fingerprint touch event also includes a group of touch positions and touch times, that is, a touch position and a touch time that are detected during a time period from a time when the user touches the fingerprint collection component by using a finger to a time when the finger of the user is lifted from the fingerprint collection component.

It should be noted that this embodiment of this application does not limit an execution sequence of step 301 and step 302, the terminal may execute step 301 and then execute step 302, or may execute step 302 and then execute step 302, or may execute step 301 and step 302 at the same time, which is not limited in this embodiment of this application.

303. The terminal determines whether an accidental touch operation occurs based on touch parameters in the screen touch event and the fingerprint touch event.

The touch parameter includes the touch position and the touch time, and the touch parameter certainly may further include parameters such as a displacement and acceleration, where the parameters may reflect a specific gesture in the screen touch event (or the fingerprint touch event), for example, tap, sliding up, sliding down, sliding left, sliding right, and double tap, which is not limited in this embodiment of this application.

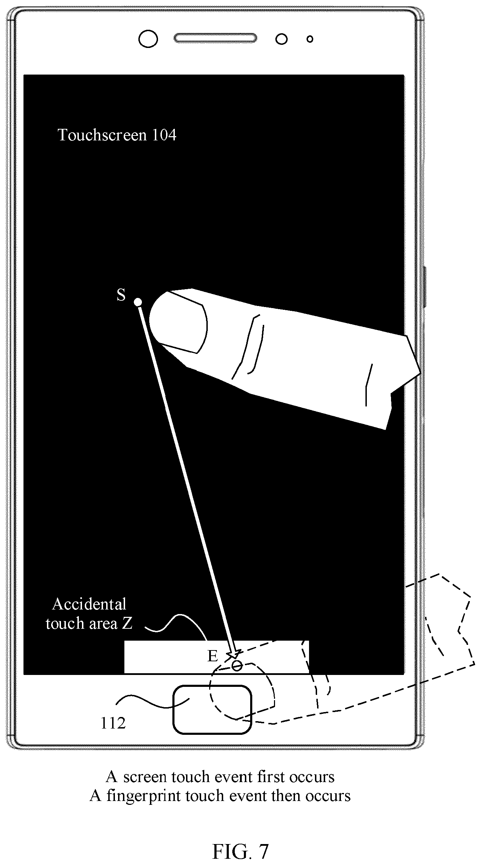

In a possible design method, when the screen touch event occurs before the fingerprint touch event, that is, the user first touches the touchscreen and then touches the fingerprint collection component, the terminal may determine whether a gesture of the user on the touchscreen is a slide operation based on the touch parameter in the screen touch event. For example, as shown in FIG. 7, when sliding from an S point to an E point on the touchscreen 104, the finger of the user accidentally touches the fingerprint collection component 112. In this case, the terminal may obtain the screen touch event and the fingerprint touch event that are triggered in sequence when the user slides from the S point to the E point.

In this way, when the gesture of the user on the touchscreen 104 is a slide operation, the terminal may further determine whether a touch position is recorded in the accidental touch area Z of the touchscreen 104 within a preset time (for example, within 300 ms) before the finger of the user enters the fingerprint collection component 112 based on the touch positions recorded in the screen touch event and the fingerprint touch event. If the touch position is recorded in the accidental touch area Z, there is a high probability that the user accidentally touches the fingerprint collection component 112 when the user performs the slide operation on the touchscreen 104. In this case, the fingerprint touch event obtained in step 302 is the accidental touch operation.

Optionally, to improve the accuracy of the terminal to identity the accidental touch operation, when the gesture of user on the touchscreen 104 is the slide operation, the terminal may further compare a time T1 (for example, a moment when the finger of the user leaves the accidental touch area Z) during which the finger of the user is in the accidental touch area Z in the screen touch event, and a time T2 (for example, a moment when the finger of the user enters the fingerprint collection component 112) during which the finger of the user is on the fingerprint collection component 112 in the fingerprint touch event. In this way, if a time interval between T1 and T2 is short (for example, T2-T1<a preset time threshold), it may be further determined that the user accidentally touches the fingerprint collection component 112 when the user slides from the S point to the E point on the touchscreen 104, that is, the fingerprint touch event is the accidental touch operation.

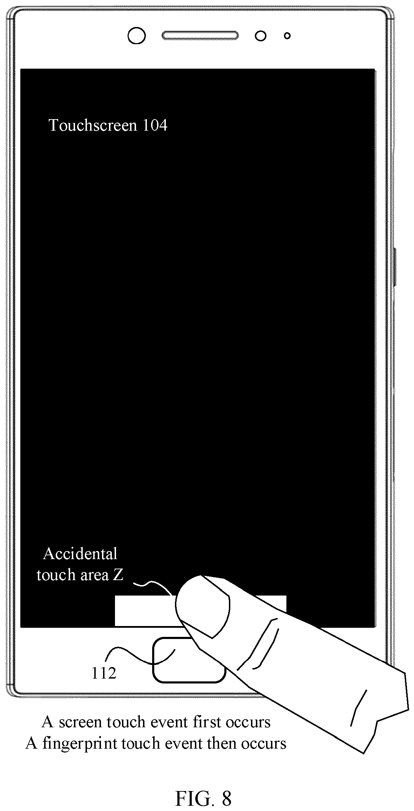

In another possible design method, when the screen touch event occurs before the fingerprint touch event, and if the terminal determines that the gesture of the user on the touchscreen is not the slide operation, for example, as shown in FIG. 8, the user accidentally touches the fingerprint collection component 112 when the user performs a tap operation on the touchscreen 104, the screen touch event occurs before the fingerprint touch event, that is, the finger of the user first touches the touchscreen 104 and then touches the fingerprint collection component 122. This indicates that the user intends to touch the touchscreen 104 but not to touch the fingerprint collection component 112. Therefore, the terminal may determine the fingerprint touch event as the accidental touch operation.

The touch point usually falls in the accidental touch area Z when the user accidentally touches the fingerprint collection component 112. Therefore, still as shown in FIG. 8, when the screen touch event occurs before the fingerprint touch event, the terminal may further determine whether the touch point in the screen touch event is located in the accidental touch area Z; when the touch point in the screen touch event is located in the accidental touch area Z, the terminal may further determine the fingerprint touch event as the accidental touch operation.

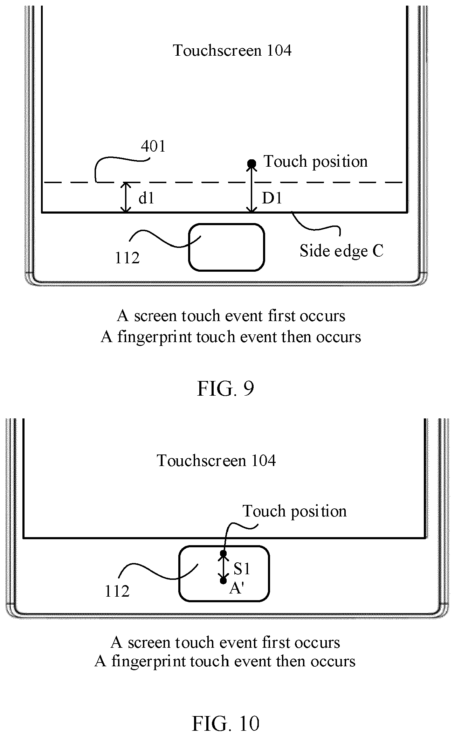

Optionally, to improve the accuracy of the terminal to identify the accidental touch operation, as shown in FIG. 9, when it is determined that the gesture of the user on the touchscreen 104 is not the slide operation, the terminal may further calculate a distance D1 between the touch position of the finger of the user in the screen touch event and the side edge C (that is, a side edge that is of the touchscreen and that is close to the fingerprint collection component) of the touchscreen. In this way, if the distance D1 is greater than a first distance threshold d1, it indicates that the touch position of the finger of the user in the screen touch event is located above a dotted line 401 in FIG. 9, that is, the touch position of the finger of the user is closer to a center of the touchscreen 104, that is, there is a high probability that the user intends to tap the touchscreen 104. Therefore, the terminal may determine the fingerprint touch event as the accidental touch operation.

Alternatively, as shown in FIG. 10, the terminal may further calculate a distance S1 between the touch position of the finger of the user on the fingerprint collection component 112 in the fingerprint touch event and the central position A' of the fingerprint collection component 112. If the distance S1 is greater than a second distance threshold s1, it indicates that the touch position of the finger of the user in the fingerprint touch event is far away from the central position A' of the fingerprint collection component 112, that is, there is a high probability that the user intends to tap the touchscreen 104. Therefore, the terminal may determine the fingerprint touch event as the accidental touch operation.

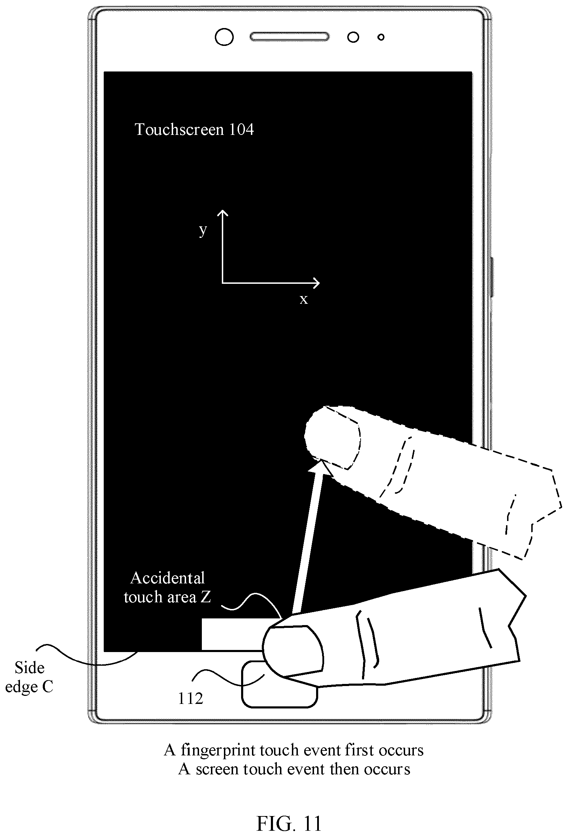

In another possible design method, when the fingerprint touch event occurs before the screen touch event, that is, the user first touches the fingerprint collection component and then touches the touchscreen, the terminal may determine whether the gesture of the user on the fingerprint collection component is a vertical slide operation based on the touch parameter in the fingerprint touch event. For example, as shown in FIG. 11, when the finger of the user slides upward from the side edge C on the touchscreen 104 to display a pull-up menu, the finger may accidentally touch the fingerprint collection component 112 that is close to the side edge C, so that the terminal may in sequence obtain the fingerprint touch event and the screen touch event that are triggered by the user.

In this case, the terminal may determine whether the gesture of the user on the fingerprint collection component 112 is a slide operation in a vertical direction (that is, a direction of a y axis in a Cartesian coordinate system shown in FIG. 11) based on the touch parameter in the fingerprint touch event, for example, a coordinate of the touch position.

A fingerprint sensor (for example, a photodiode) in the fingerprint collection component 112 is generally in a shape of a short strip. Therefore, a vertical slide operation of a user is usually not set in a terminal in the prior art. In this way, when the gesture triggered by the user in the fingerprint touch event is a vertical slide operation, the terminal may directly determine the fingerprint touch event as the accidental touch operation.

Certainly, when the terminal determines that the gesture triggered by the user in the fingerprint touch event is the vertical slide operation, still as shown in FIG. 11, usually the finger of the user passes through the accidental touch area Z when sliding up from a bottom of the touchscreen 104. Therefore, if the accidental touch area Z in this case further includes the touch point in the screen touch event, the fingerprint touch event may be further determined as the accidental touch operation. In this way, the terminal may determine whether the touch position in which the finger of the user enters the touchscreen 104 is in the accidental touch area Z based on the touch position and the touch time of the touch point in the screen touch event. If the touch position is in the accidental touch area Z, it is further indicated that the user accidentally touches the fingerprint collection component 112 when performing the slide operation on the touchscreen 104, that is, the fingerprint touch event obtained in step 302 is the accidental touch operation, improving the accuracy of the terminal to identify the accidental touch operation.

Optionally, the terminal may further compare a time T3 during which the finger of the user enters the accidental touch area Z in the screen touch event, and a time T4 during which the finger of the user leaves the fingerprint collection component 112 in the fingerprint touch event. In this way, if a time interval between T3 and T4 is short (for example, T3-T4<a preset time threshold), it may be further determined that the user accidentally touches the fingerprint collection component 112 when the user slides up from the side edge C on the touchscreen 104, that is, the fingerprint touch event is the accidental touch operation.

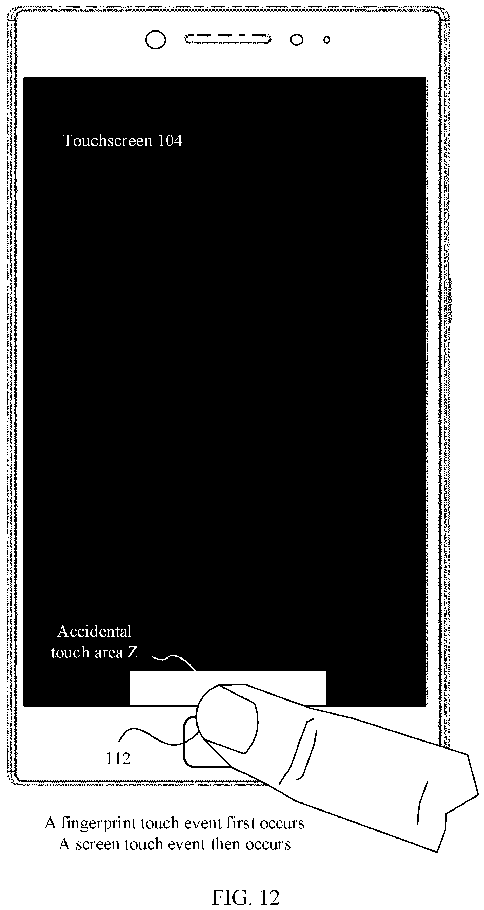

In another possible design method, when the fingerprint touch event occurs before the screen touch event, and if the terminal determines that the gesture of the user on the fingerprint collection component is not the vertical slide operation, for example, as shown in FIG. 12, the user accidentally touches the touchscreen 104 when performing a tap operation on the fingerprint collection component 112, the fingerprint touch event occurs before the screen touch event, that is, the finger of the user first touches the fingerprint collection component 112 and then touches the touchscreen 104. This indicates that the user intends to touch the fingerprint collection component 112 but not to touch the touchscreen 104. Therefore, the terminal may determine the screen touch event obtained in step 301 as the accidental touch operation.

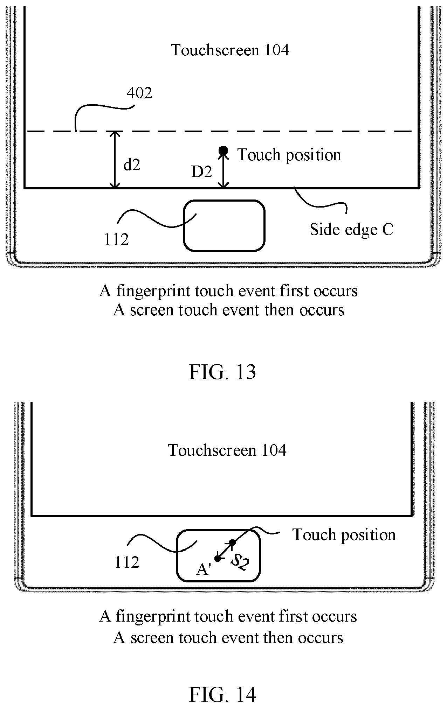

Optionally, to improve the accuracy of the terminal to identify the accidental touch operation, as shown in FIG. 13, when it is determined that the gesture of the user on the fingerprint collection component 112 is not the vertical slide operation, the terminal may further calculate a distance D2 between the touch position of the finger of the user in the screen touch event and the side edge C (that is, the side edge that is of the touchscreen and that is close to the fingerprint collection component 112) of the touchscreen. In this way, if the distance D2 is less than a third distance threshold d2 (the third distance threshold d2 may be equal to the first distance threshold d1), it indicates that the touch position of the finger of the user in the screen touch event is located below a dotted line 402 in FIG. 13, that is, the touch position of the finger of the user is closer to the fingerprint collection component 112, and there is a high probability that the user intends to tap the fingerprint collection component 112. Therefore, the terminal may determine the screen touch event as the accidental touch operation.

Alternatively, as shown in FIG. 14, the terminal may further calculate a distance S2 between the touch position of the finger of the user in the fingerprint touch event and the central position A' of the fingerprint collection component 112. In this way, if the distance S2 is less than a fourth distance threshold s2 (the fourth distance threshold s2 may be equal to the second distance threshold s1), it indicates that the touch position of the finger of the user in the fingerprint touch event is closer to the central position A' of the fingerprint collection component 112, that is, there is a high probability that the user intends to tap the fingerprint collection component 112. Therefore, the terminal may determine the screen touch event as the accidental touch operation.

Certainly, the terminal may further determine an operation intention of the user based on a contact area of the finger of the user on the fingerprint collection component 112 in the fingerprint touch event. For example, if the contact area of the finger of the user on the fingerprint collection component 112 in the fingerprint touch event is greater than a preset area threshold, it also indicates that the touch position of the finger of the user is closer to the central position A' of the fingerprint collection component 112, that is, there is a high probability that the user intends to tap the fingerprint collection component 112. Therefore, the terminal may determine the screen touch event as the accidental touch operation.

So far, the terminal may analyze whether the screen touch event or the fingerprint touch event is the accidental touch operation based on the touch positions and the touch times of the touch points in the screen touch event and the fingerprint touch event, to reduce the probability of the accidental touch operation when the user performs the touch operation on the touchscreen or the fingerprint collection component.

It should be noted that, in the foregoing embodiment the occurrence sequence of the screen touch event and the fingerprint touch event is determined first and then the specific gesture of the screen touch event and the fingerprint touch event are determined. It may be understood that the terminal may also determine the specific gesture in the screen touch event and the fingerprint touch event first and then determine the accidental touch operation based on the occurrence sequence of the screen touch event and the fingerprint touch event. This is not limited in this embodiment of this application.

304. When the accidental touch operation is the fingerprint touch event, the terminal executes an operation instruction corresponding to the screen touch event.

305. When the accidental touch operation is the screen touch event, the terminal executes an operation instruction corresponding to the fingerprint touch event.

In steps 304 and 305, when the fingerprint touch event is determined as the accidental touch operation, the terminal may shield the fingerprint touch event, and execute only the operation instruction corresponding to the screen touch event. For example, as shown in FIG. 7, the finger of the user accidentally touches the fingerprint collection component 112 when sliding from the S point to the E point on the touchscreen 104; when the terminal determines the fingerprint touch event on the fingerprint collection component 112 as the accidental touch operation, the terminal may execute only the operation instruction corresponding to the slide operation from the S point to the E point, for example, a volume adjustment instruction, and does not need to execute the operation instruction triggered when the fingerprint collection component is accidentally touched, for example, a return instruction, improving execution efficiency of the operation of the user.

Correspondingly, when the screen touch event is determined as the accidental touch operation, the terminal may shield the screen touch event, and execute only the operation instruction corresponding to the fingerprint touch event. For example, as shown in FIG. 12, the user accidentally touches the touchscreen 104 when performing the tap operation on the fingerprint collection component 112. When the terminal determines the screen touch event as the accidental touch operation, the terminal executes only the operation instruction corresponding to the tap on the fingerprint collection component 112, for example, a fingerprint payment instruction, and does not need to execute the operation instruction triggered when the touchscreen 104 is accidentally touched, for example, an instruction to open an APP, improving the execution efficiency of the operation of the user.

The shielding the screen touch event or the fingerprint touch event may be executed by a fingerprint chip (or a chip of the touchscreen) of the fingerprint collection component. For example, as shown in FIG. 11, the fingerprint chip of the fingerprint collection component 112 determines that the gesture triggered by the user in the fingerprint touch event is the vertical slide operation, and the fingerprint chip may directly drop the fingerprint touch event without reporting to an operating system of the terminal; or the shielding the screen touch event or the fingerprint touch event may be executed by a Framework layer (framework layer) in the operating system (for example, an Android operating system) of the terminal, the operating system determines the accidental touch operation after receiving the screen touch event and the fingerprint touch event, and the operating system does not allocate the accidental touch operation to a corresponding application when allocating a related instruction to the corresponding application; or the shielding the screen touch event or the fingerprint touch event may also be executed by an application that is installed at an application layer of the terminal, and if the operating system allocates the determined accidental touch operation to the corresponding application, the application may not respond to the accidental touch operation. This is not limited in this embodiment of this application.

Optionally, when the accidental touch operation is the screen touch event, still as shown in FIG. 3, after step 305 is executed, the terminal may further execute following steps 306 and 307.

306. The terminal continues to detect a screen touch event of the finger of the user on the touchscreen.

307. When a movement displacement of a touch point in the screen touch event satisfies a preset condition, the terminal sends a touch parameter of the screen touch event.

Specifically, in steps 306 and 307, if the terminal determines the screen touch event in step 301 as the accidental touch operation, the terminal may further continue to detect the screen touch event of the finger of the user on the touchscreen. In this way, if the finger of the user continues to slide over a long distance on the touchscreen or the finger of the user performs a gesture such as a tap or a long press on the touchscreen, it indicates that the user intends to execute the screen touch event on the touchscreen, that is, it is wrong for the terminal to determine the screen touch event in step 301 as the accidental touch operation in step 303.

In this case, the terminal may send the touch parameter in the screen touch event to a related application, so that the terminal can execute the operation instruction corresponding to the screen touch event, and the accuracy of accidental touch identification is improved.

In addition, when the movement displacement of the touch point in the screen touch event satisfies the preset condition, it indicates that the user does not intend to execute the fingerprint touch event in step 302. Therefore, the terminal may further stop executing the operation instruction corresponding to the fingerprint touch event, to avoid executing the operation instruction that the user does not intend to execute.

Correspondingly, when the accidental touch operation is the fingerprint touch event, the terminal continues to detect the fingerprint touch event of the finger of the user on the fingerprint collection component 112. In this way, when the touch parameter of the touch point in the collected fingerprint touch event satisfies a condition, for example, press strength of the finger of the user on the fingerprint collection component 112 is greater than a threshold, or the touch time of the finger of the user on the fingerprint collection component 112 is greater than a threshold, it indicates that the user intends to execute the fingerprint touch event on the fingerprint collection component 112, that is, it is wrong for the terminal to determine the fingerprint touch event as the accidental touch operation in step 303. In this case, the terminal may send the touch parameter in the fingerprint touch event, so that the terminal can execute the operation instruction corresponding to the fingerprint touch event, and the accuracy of the accidental touch identification is improved.

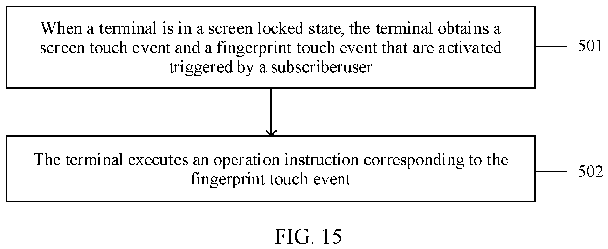

An embodiment of this application further provides an anti-accidental touch method. As shown in FIG. 15, the method includes the following steps.

501. A terminal obtains a screen touch event and a fingerprint touch event that are triggered by a user when the terminal is in a screen locked state.

502. The terminal executes an operation instruction corresponding to the fingerprint touch event.

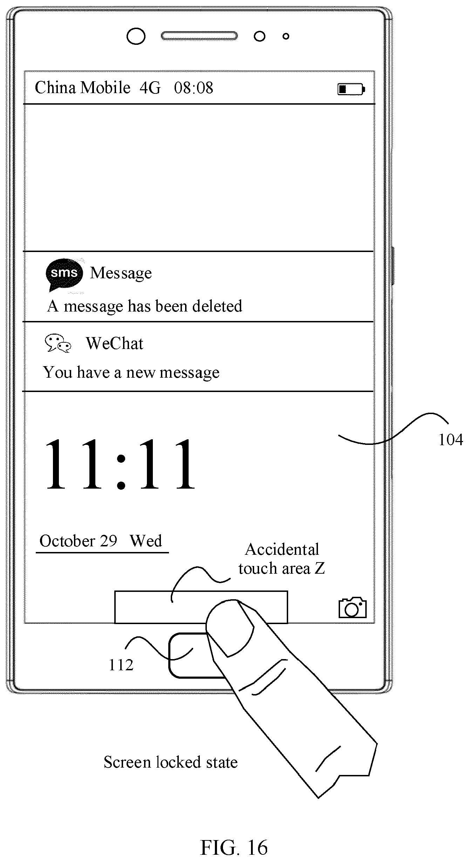

Specifically, when the terminal is in the screen locked state, an area that is of a touchscreen and that is close to a fingerprint collection component is usually not disposed with a key operation. Therefore, as shown in FIG. 16, when the terminal is in the screen locked state, if the terminal obtains the screen touch event and the fingerprint touch event that are triggered by the user, for example, when not only the fingerprint touch event on a fingerprint collection component 112 but also the fingerprint touch event in an accidental touch area Z on a touchscreen 104 are obtained within 1 second, this is usually caused by an accidental touch of the user on the touchscreen 104. Therefore, the terminal may shield the screen touch event as an accidental touch operation, and preferentially execute an operation instruction corresponding to the fingerprint touch event, for example, an unlock instruction that unlocks the terminal.

Furthermore, similar to steps 306 and 307, after shielding the screen touch event, the terminal may further continue to detect a screen touch event of a finger of the user on the touchscreen. When a movement displacement of a touch point in the detected screen touch event satisfies a preset condition, it indicates that the user intends to execute the screen touch event on the touchscreen. In this case, the terminal may send a touch parameter in the screen touch event.

For example, when the terminal is in the screen locked state, the finger of the user accidentally touches the fingerprint collection component 112 when sliding up from a bottom of the touchscreen. In this case, the user intends to trigger a pull-up menu on the touchscreen. However, after obtaining the screen touch event and the fingerprint touch event, the terminal preferentially executes an operation instruction corresponding to the fingerprint touch event, for example, an unlock instruction. In this way, in this embodiment of this application, when the terminal determines the screen touch event as the accidental touch operation, the terminal may continue to detect a screen touch event of the finger of the user on the touchscreen; when a displacement of a touch point in the screen touch event is greater than a displacement threshold (for example, 1 cm), the collected screen touch event may be sent to an operating system of the terminal, to trigger the terminal to respond to the screen touch event and to display the pull-up menu for the user.

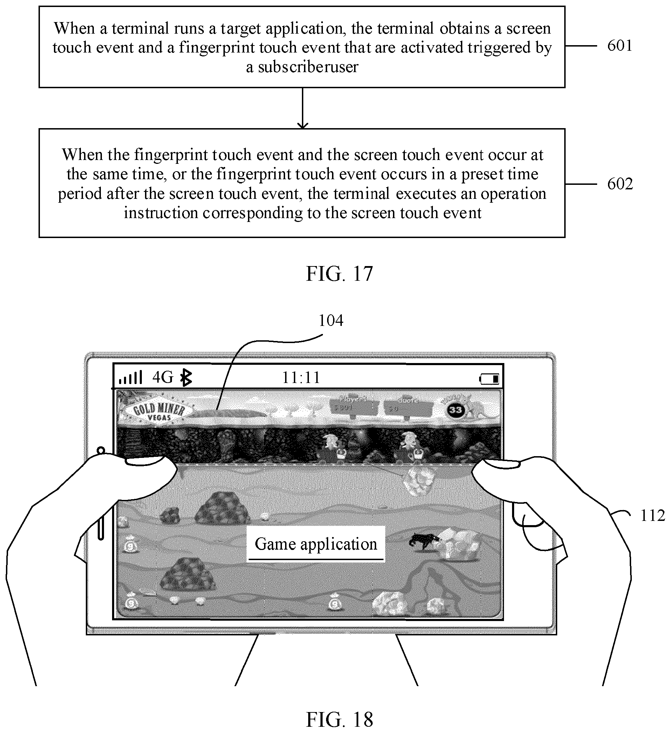

An embodiment of this application further provides an anti-accidental touch method. As shown in FIG. 17, the method includes the following steps.

601. A terminal obtains a screen touch event and a fingerprint touch event that are triggered by a user when the terminal runs a target application.

602. The terminal executes an operation instruction corresponding to the screen touch event when the fingerprint touch event and the screen touch event occur at the same time or the fingerprint touch event occurs in a preset time after the screen touch event.

Specifically, an application list may be preset in the terminal, and applications in the application list are all the target applications. Generally, there is a high probability that an accidental touch operation occurs when the target application is running on a fingerprint collection component 112. For example, the target application is a game application.

In this way, in step 601, the terminal may determine whether a running application is the target application based on a package name (packet name) of the application, or a category of the application in an application market when the application is downloaded. Certainly, the target application may be set manually by the user in setting options, or the target application may be pushed to the terminal by a server after the server performs big data statistics collection on applications that easily trigger a misoperation, which is not limited in this embodiment of this application.

For example, a game application is the target application. The user needs to frequently perform a touch operation on the touchscreen when the game application is running. In this case, a probability that an accidental touch operation occurs is greatly increased. When the terminal runs the game application, as shown in FIG. 18, if the terminal not only obtains the screen touch event on a touchscreen 104 but also obtains the fingerprint touch event on a fingerprint collection component 112, the terminal may execute foregoing step 602 to avoid that a game progress is affected due to the accidental touch operation.

In step 602, when the terminal obtains the fingerprint touch event, still as shown in FIG. 18, if a finger of the user remains on the touchscreen 104 and not lifted in the screen touch event, it indicates that the user is operating the running game application. In this case, the terminal may shield the fingerprint touch event as the accidental touch operation and execute only the operation instruction corresponding to the screen touch event.

Alternatively, in step 602, assume that the finger of the user is just lifted from the touchscreen 104 when the terminal obtains the fingerprint touch event, for example, the terminal obtains the fingerprint touch event 300 ms later after the finger of the user is lifted from the touchscreen 104 in the screen touch event. Because the user needs to frequently perform a touch operation when the game application is running, for example, continuous tap operations, a new screen touch event is probably detected in a preset time (for example, within 500 ms) after the finger of the user is lifted from the touchscreen 104. In this way, if the fingerprint touch event occurs within the preset time after the screen touch event, the terminal may also shield the fingerprint touch event as the accidental touch operation, to avoid that the running game is interrupted due to an accidental touch on the fingerprint collection component when the user performs a game operation.

It may be understood that the terminal includes a hardware structure and/or a software module corresponding to each function to implement the foregoing functions. A person skilled in the art should easily be aware that, in combination with the examples of units and algorithm steps that are described in the embodiments disclosed in this specification, this embodiment of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of this application.

In this embodiment of this application, the terminal may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

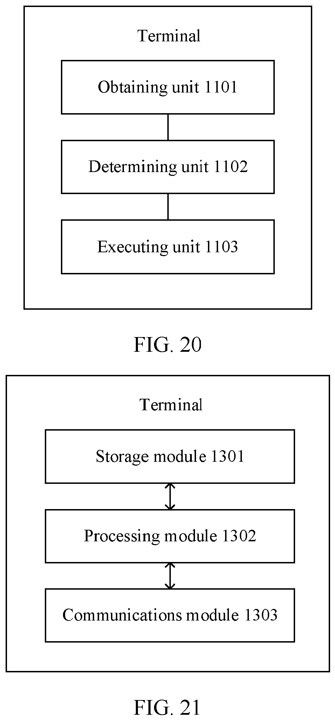

When each functional module is obtained through division based on each corresponding function, FIG. 20 shows a possible schematic structural diagram of a terminal in the foregoing embodiments. The terminal includes: an obtaining unit 1101, a determining unit 1102, and an executing unit 1103.

The obtaining unit 1101 is configured to support the terminal to execute procedures 301, 302 and 306 in FIG. 3, procedure 501 in FIG. 15, and procedure 601 in FIG. 17; the determining unit 1102 is configured to support the terminal to execute procedure 303 in FIG. 3; and the executing unit 1103 is configured to support the terminal to execute procedures 304, 305 and 307, procedure 502 in FIG. 15, and procedure 602 in FIG. 17. All related content of the steps in the foregoing method embodiments may be cited in function descriptions of corresponding functional modules, and details are not described herein again.

When an integrated unit is used, FIG. 21 shows a possible schematic structural diagram of the terminal in the foregoing embodiments. The terminal includes: a processing module 1302 and a communications module 1303. The processing module 1302 is configured to control and manage an action of the terminal. The communications module 1303 is configured to support the terminal in communicating with another network entity. The terminal may further include a storage module 1301, configured to store a program code and data of the terminal.

The processing module 1302 may be a processor or a controller, such as a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), or another programmable logical device, a transistor logical device, a hardware component, or a combination thereof. The processing module 1302 may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor. The communications module 1303 may be a transceiver, a transmission/receiving circuit, a communications interface, or the like. The storage module 1301 may be a memory.

When the processing module 1302 is the processor, the communications module 1303 is an RF transmission/receiving circuit, and the storage module 1301 is the memory, the terminal in this embodiment of this application may be the mobile phone 100 in FIG. 2.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on the computer, the procedures or functions according to the embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The protection scope of this application shall be subject to the protection scope of the claims.

## Claims

1. An anti-accidental touch method, wherein the method is applied to a mobile terminal, the terminal comprises a touchscreen and a target key that is disposed next to the touchscreen, and the method comprises:
obtaining (301), by the terminal, a screen touch event detected on the touchscreen, wherein the screen touch event comprises a touch position and a touch time of a touch point on the touchscreen; and
determining whether the touch point of the screen touch event is within an accidental touch area on the touchscreen, wherein a position and a size of the accidental touch area is adjusted based on a specific application scenario or a touch habit of a user, and when the touch point of the screen touch event is determined to be within the accidental touch area on the touchscreen, the method further comprises performing the steps of:
obtaining (302), by the terminal, a key touch event detected on the target key, wherein the key touch event comprises a touch position and a touch time of a touch point on the target key;
determining (303), by the terminal, an occurrence sequence of the screen touch event and the key touch event based on the touch times of the touch points in the screen touch event and the key touch event;
determining, by the terminal, a touch gesture in the screen touch event or the key touch event; and
determining, by the terminal, one of the screen touch event and the key touch event as the accidental touch operation based on the occurrence sequence and the touch gesture; and
executing, by the terminal, an operation instruction corresponding to the key touch event when the accidental touch operation is the screen touch event; or executing, by the terminal, an operation instruction corresponding to the screen touch event when the accidental touch operation is the key touch event.

2. The method according to claim 1, wherein when the occurrence sequence is that the screen touch event occurs before the key touch event, and the touch gesture in the screen touch event is a slide gesture, the determining, by the terminal, one of the screen touch event and the key touch event as the accidental touch operation comprises:
determining, by the terminal, the touch point comprised in the accidental touch area in the screen touch event in a preset time before the key touch event occurs, wherein the accidental touch area is an area that is comprised in the touchscreen and that is in advance disposed close to a side edge of the target key; and
determining, by the terminal, the key touch event as the accidental touch operation.

3. The method according to claim 2, wherein the determining, by the terminal, the key touch event as the accidental touch operation comprises:
determining, by the terminal, a first time difference between a moment when the touch point in the screen touch event leaves the touchscreen and a moment when the touch point in the key touch event enters the target key; and
determining, by the terminal, the key touch event as the accidental touch operation when the first time difference is less than a preset time threshold.

4. The method according to claim 1, wherein when the occurrence sequence is that the screen touch event occurs before the key touch event, and the touch gesture in the screen touch event is not a slide gesture, the determining, by the terminal, one of the screen touch event and the key touch event as the accidental touch operation comprises:
determining, by the terminal, the key touch event as the accidental touch operation.

5. The method according to claim 4, wherein the determining, by the terminal, the key touch event as the accidental touch operation comprises:
determining, by the terminal, a first distance from the touch position of the touch point in the screen touch event to a target side edge of the touchscreen, wherein the target side edge is a side edge that is of the touchscreen and that is close to the target key; and
determining, by the terminal, the key touch event as the accidental touch operation when the first distance is greater than a first distance threshold.

6. The method according to claim 4 or 5, wherein the determining, by the terminal, the key touch event as the accidental touch operation comprises:
determining, by the terminal, a second distance from the touch position of the touch point in the key touch event to a center of the target key; and
determining, by the terminal, the key touch event as the accidental touch operation when the second distance is greater than a second distance threshold.

7. The method according to claim 1, wherein when the occurrence sequence is that the key touch event occurs before the screen touch event, the touch gesture in the key touch event is a slide gesture in a target direction, and the target direction is a direction from a top of the terminal to a bottom of the terminal, the determining, by the terminal, one of the screen touch event and the key touch event as the accidental touch operation comprises:
determining, by the terminal, the key touch event as the accidental touch operation.

8. The method according to claim 7 wherein the determining, by the terminal, the key touch event as the accidental touch operation comprises:
determining, by the terminal, a second time difference between a moment when the touch point in the key touch event leaves the target key and a moment when the touch point in the screen touch event enters the touchscreen; and
determining, by the terminal, the key touch event as the accidental touch operation when the second time difference is less than a preset time threshold.

9. The method according to claim 1, wherein when the occurrence sequence is that the key touch event occurs before the screen touch event, and the touch gesture in the key touch event is not a slide gesture in a target direction, the determining, by the terminal, one of the screen touch event and the key touch event as the accidental touch operation comprises:
determining, by the terminal, the screen touch event as the accidental touch operation.

10. The method according to claim 9, wherein the determining, by the terminal, one of the screen touch event and the key touch event as the accidental touch operation comprises:
determining, by the terminal, a third distance from the touch position of the touch point in the screen touch event to a target side edge of the touchscreen, wherein the target side edge is a side edge that is of the touchscreen and that is close to the target key; and
determining, by the terminal, the screen touch event as the accidental touch operation if the third distance is less than a third distance threshold.

11. The method according to claim 9 or 10, wherein the determining, by the terminal, one of the screen touch event and the key touch event as the accidental touch operation comprises:
determining, by the terminal, a fourth distance from the touch position of the touch point in the key touch event to a center of the target key; and
determining, by the terminal, the screen touch event as the accidental touch operation if the fourth distance is less than a fourth distance threshold.

12. The method according to any one of claims 9 to 11, wherein after the determining, by the terminal, the screen touch event as the accidental touch operation, the method further comprises:
continuing to detect, by the terminal, a screen touch event of a finger of a user on the touchscreen; and
responding, by the terminal, to the screen touch event when a movement displacement of a touch point in the screen touch event satisfies a preset condition.

13. A mobile terminal comprising a storage module (1301), a processing module (1302) and a communications module (1303); wherein the processing module is configured to control and manage an action of the terminal; the communications module is configured to support the terminal in communicating with another network entity; and the storage module is configured to store a program code and data of the terminal; wherein the program code comprises a set of instructions which when executed by the processing module causes the terminal to perform a method according to any one of claims 1 to 12.

14. A computer program product storing a program code which comprises a set of instructions which when executed by a mobile terminal causes the terminal to perform a method according to any one of claims 1 to 12.

## Patentansprüche

1. Verfahren zur Vermeidung versehentlicher Berührung, wobei das Verfahren auf ein mobiles Endgerät angewendet wird, das Endgerät einen Touchscreen und eine Zieltaste umfasst, die neben dem Touchscreen angeordnet ist, und das Verfahren Folgendes umfasst:
Erlangen (301), durch das Endgerät, eines Bildschirmberührungsereignisses, das auf dem Touchscreen erkannt wird, wobei das Bildschirmberührungsereignis eine Berührungsposition und einen Berührungszeitpunkt eines Berührungspunkts auf dem Touchscreen umfasst; und
Bestimmen, ob der Berührungspunkt des Bildschirmberührungsereignisses innerhalb eines versehentlichen Berührungsbereichs auf dem Touchscreen liegt, wobei eine Position und eine Größe des versehentlichen Berührungsbereichs basierend auf einem spezifischen Anwendungsszenario oder einer Berührungsgewohnheit eines Benutzers angepasst wird, und, wenn bestimmt wird, dass der Berührungspunkt des Bildschirmberührungsereignisses innerhalb des versehentlichen Berührungsbereichs auf dem Touchscreen liegt, das Verfahren ferner Durchführen der folgenden Schritte umfasst:
Erlangen (302), durch das Endgerät, eines Tastenberührungsereignisses, das auf der Zieltaste erkannt wird, wobei das Tastenberührungsereignis eine Berührungsposition und einen Berührungszeitpunkt eines Berührungspunkts auf der Zieltaste umfasst;
Bestimmen (303), durch das Endgerät, einer Auftrittssequenz des Bildschirmberührungsereignisses und des Tastenberührungsereignisses basierend auf den Berührungszeitpunkten der Berührungspunkte in dem Bildschirmberührungsereignis und dem Tastenberührungsereignis;
Bestimmen, durch das Endgerät, einer Berührungsgeste in dem Bildschirmberührungsereignis oder dem Tastenberührungsereignis; und
Bestimmen, durch das Terminal, eines des Bildschirmberührungsereignisses und des Tastenberührungsereignis als den versehentlichen Berührungsvorgang basierend auf der Auftrittssequenz und der Berührungsgeste; und
Ausführen, durch das Endgerät, einer Betriebsanweisung, die dem Tastenberührungsereignis entspricht, wenn der versehentliche Berührungsvorgang das Bildschirmberührungsereignis ist; oder Ausführen, durch das Endgerät, einer Betriebsanweisung, die dem Bildschirmberührungsereignis entspricht, wenn der versehentliche Berührungsvorgang das Tastenberührungsereignis ist.

2. Verfahren nach Anspruch 1, wobei, wenn die Auftrittssequenz darin besteht, dass das Bildschirmberührungsereignis vor dem Tastenberührungsereignis auftritt und die Berührungsgeste in dem Bildschirmberührungsereignis eine Wischgeste ist, das Bestimmen, durch das Endgerät, eines des Bildschirmberührungsereignisses und des Tastenberührungsereignisses als den versehentlichen Berührungsvorgang Folgendes umfasst:
Bestimmen, durch das Endgerät, des Berührungspunkts, der in dem versehentlichen Berührungsbereich in dem Bildschirmberührungsereignis umfasst ist, in einer voreingestellten Zeit, bevor das Tastenberührungsereignis auftritt, wobei der versehentliche Berührungsbereich ein Bereich ist, der in dem Touchscreen umfasst ist und der im Voraus nahe einer Seitenkante der Zieltaste angeordnet ist; und
Bestimmen, durch das Endgerät, des Tastenberührungsereignisses als den versehentlichen Berührungsvorgang.

3. Verfahren nach Anspruch 2, wobei das Bestimmen, durch das Endgerät, des Tastenberührungsereignisses als den versehentlichen Berührungsvorgang Folgendes umfasst:
Bestimmen, durch das Endgerät, einer ersten Zeitdifferenz zwischen einem Augenblick, in dem der Berührungspunkt in dem Bildschirmberührungsereignis den Touchscreen verlässt, und einem Augenblick, in dem der Berührungspunkt in dem Tastenberührungsereignis in die Zieltaste eintritt; und
Bestimmen, durch das Endgerät, des Tastenberührungsereignisses als den versehentlichen Berührungsvorgang, wenn die erste Zeitdifferenz geringer als ein voreingestellter Zeitschwellenwert ist.

4. Verfahren nach Anspruch 1, wobei, wenn die Auftrittssequenz darin besteht, dass das Bildschirmberührungsereignis vor dem Tastenberührungsereignis auftritt und die Berührungsgeste in dem Bildschirmberührungsereignis keine Wischgeste ist, das Bestimmen, durch das Endgerät, eines des Bildschirmberührungsereignisses und des Tastenberührungsereignisses als den versehentlichen Berührungsvorgang Folgendes umfasst:
Bestimmen, durch das Endgerät, des Tastenberührungsereignisses als den versehentlichen Berührungsvorgang.

5. Verfahren nach Anspruch 4, wobei das Bestimmen, durch das Endgerät, des Tastenberührungsereignisses als den versehentlichen Berührungsvorgang Folgendes umfasst:
Bestimmen, durch das Endgerät, einer ersten Distanz von der Berührungsposition des Berührungspunkts in dem Bildschirmberührungsereignis zu einer Zielseitenkante des Touchscreens, wobei die Zielseitenkante eine Seitenkante ist, die zu dem Touchscreen gehört und die sich nahe der Zieltaste befindet; und
Bestimmen, durch das Endgerät, des Tastenberührungsereignisses als den versehentlichen Berührungsvorgang, wenn die erste Distanz größer als ein erster Distanzschwellenwert ist.

6. Verfahren nach Anspruch 4 oder 5, wobei das Bestimmen, durch das Endgerät, des Tastenberührungsereignisses als den versehentlichen Berührungsvorgang Folgendes umfasst:
Bestimmen, durch das Endgerät, einer zweiten Distanz von der Berührungsposition des Berührungspunkts in dem Tastenberührungsereignis zu einer Mitte der Zieltaste; und
Bestimmen, durch das Endgerät, des Tastenberührungsereignisses als den versehentlichen Berührungsvorgang, wenn die zweite Distanz größer als ein zweiter Distanzschwellenwert ist.

7. Verfahren nach Anspruch 1, wobei, wenn die Auftrittssequenz darin besteht, dass das Tastenberührungsereignis vor dem Bildschirmberührungsereignis auftritt, die Berührungsgeste in dem Tastenberührungsereignis eine Wischgeste in eine Zielrichtung ist und die Zielrichtung eine Richtung von einer Oberseite des Endgeräts zu einer Unterseite des Endgeräts ist, das Bestimmen, durch das Endgerät, eines des Bildschirmberührungsereignisses und des Tastenberührungsereignisses als den versehentlichen Berührungsvorgang Folgendes umfasst:
Bestimmen, durch das Endgerät, des Tastenberührungsereignisses als den versehentlichen Berührungsvorgang.

8. Verfahren nach Anspruch 7, wobei das Bestimmen, durch das Endgerät, des Tastenberührungsereignisses als den versehentlichen Berührungsvorgang Folgendes umfasst:
Bestimmen, durch das Endgerät, einer zweiten Zeitdifferenz zwischen einem Augenblick, in dem der Berührungspunkt in dem Tastenberührungsereignis die Zieltaste verlässt, und einem Augenblick, in dem der Berührungspunkt in dem Bildschirmberührungsereignis in den Touchscreen eintritt; und
Bestimmen, durch das Endgerät, des Tastenberührungsereignisses als den versehentlichen Berührungsvorgang, wenn die zweite Zeitdifferenz geringer als ein voreingestellter Zeitschwellenwert ist.

9. Verfahren nach Anspruch 1, wobei, wenn die Auftrittssequenz darin besteht, dass das Tastenberührungsereignis vor dem Bildschirmberührungsereignis auftritt und die Berührungsgeste in dem Tastenberührungsereignis keine Wischgeste in eine Zielrichtung ist, das Bestimmen, durch das Endgerät, eines des Bildschirmberührungsereignisses und des Tastenberührungsereignisses als den versehentlichen Berührungsvorgang Folgendes umfasst:
Bestimmen, durch das Endgerät, des Bildschirmberührungsereignisses als den versehentlichen Berührungsvorgang.

10. Verfahren nach Anspruch 9, wobei das Bestimmen, durch das Endgerät, eines des Bildschirmberührungsereignisses und des Tastenberührungsereignisses als den versehentlichen Berührungsvorgang Folgendes umfasst:
Bestimmen, durch das Endgerät, einer dritten Distanz von der Berührungsposition des Berührungspunkts in dem Bildschirmberührungsereignis zu einer Zielseitenkante des Touchscreens, wobei die Zielseitenkante eine Seitenkante ist, die zu dem Touchscreen gehört und die sich nahe der Zieltaste befindet; und
Bestimmen, durch das Endgerät, des Bildschirmberührungsereignisses als den versehentlichen Berührungsvorgang, wenn die dritte Distanz geringer als ein dritter Distanzschwellenwert ist.

11. Verfahren nach Anspruch 9 oder 10, wobei das Bestimmen, durch das Endgerät, eines des Bildschirmberührungsereignisses und des Tastenberührungsereignisses als den versehentlichen Berührungsvorgang Folgendes umfasst:
Bestimmen, durch das Endgerät, einer vierten Distanz von der Berührungsposition des Berührungspunkts in dem Tastenberührungsereignis zu einer Mitte der Zieltaste; und
Bestimmen, durch das Endgerät, des Bildschirmberührungsereignisses als den versehentlichen Berührungsvorgang, wenn die vierte Distanz geringer als ein vierter Distanzschwellenwert ist.

12. Verfahren nach einem der Ansprüche 9 bis 11, wobei nach dem Bestimmen, durch das Endgerät, des Bildschirmberührungsereignisses als den versehentlichen Berührungsvorgang das Verfahren ferner Folgendes umfasst:
Fortsetzen des Erkennens, durch das Endgerät, eines Bildschirmberührungsereignisses eines Fingers eines Benutzers auf dem Touchscreen; und
Reagieren, durch das Endgerät, auf das Bildschirmberührungsereignis, wenn eine Bewegungsverschiebung eines Berührungspunkts in dem Bildschirmberührungsereignis eine voreingestellte Bedingung erfüllt.

13. Mobiles Endgerät, umfassend ein Speichermodul (1301), ein Verarbeitungsmodul (1302) und ein Kommunikationsmodul (1303); wobei das Verarbeitungsmodul dazu konfiguriert ist, eine Handlung des Endgeräts zu steuern und zu verwalten; das Kommunikationsmodul dazu konfiguriert ist, das Endgerät beim Kommunizieren mit einer anderen Netzwerkeinheit zu unterstützen; und das Speichermodul dazu konfiguriert ist, einen Programmcode und Daten des Endgeräts zu speichern; wobei der Programmcode einen Satz von Anweisungen umfasst, die, wenn sie durch das Verarbeitungsmodul ausgeführt werden, das Endgerät dazu veranlassen, ein Verfahren nach einem der Ansprüche 1 bis 12 durchzuführen.

14. Computerprogrammprodukt, das einen Programmcode speichert, der einen Satz von Anweisungen umfasst, der, wenn er durch ein mobiles Endgerät ausgeführt wird, das Endgerät dazu veranlasst, ein Verfahren nach einem der Ansprüche 1 bis 12 durchzuführen.

## Revendications

1. Procédé évitant les appuis accidentels, dans lequel le procédé est appliqué à un terminal mobile, le terminal comprend un écran tactile et une touche cible qui est disposée à côté de l'écran tactile, et le procédé comprend :
l'obtention (301), par le terminal, d'un événement tactile d'écran détecté sur l'écran tactile, dans lequel l'événement tactile d'écran comprend une position tactile et un temps de contact d'un point tactile sur l'écran tactile ; et
la détermination du fait de savoir si le point tactile de l'événement tactile d'écran est à l'intérieur d'une zone tactile accidentelle sur l'écran tactile, dans lequel une position et une taille de la zone tactile accidentelle sont réglées sur la base d'un scénario d'application spécifique ou d'une habitude tactile d'un utilisateur, et lorsque le point tactile de l'événement tactile d'écran est déterminé comme étant à l'intérieur de la zone tactile accidentelle sur l'écran tactile, le procédé comprend également la réalisation des étapes :
d'obtention (302), par le terminal, d'un événement tactile de touche détecté sur la touche cible, dans lequel l'événement tactile de touche comprend une position tactile et un temps de contact d'un point tactile sur la touche cible ;
de détermination (303), par le terminal, d'une séquence d'occurrence de l'événement tactile d'écran et de l'événement tactile de touche sur la base des temps de contact des points tactiles dans l'événement tactile d'écran et l'événement tactile de touche ;
de détermination, par le terminal, d'un geste tactile dans l'événement tactile d'écran ou l'événement tactile de touche ; et
de détermination, par le terminal, de l'un parmi l'événement tactile d'écran et l'événement tactile de touche comme étant l'opération tactile accidentelle sur la base de la séquence d'occurrence et du geste tactile ; et
d'exécution, par le terminal, d'une instruction d'opération correspondant à l'événement tactile de touche lorsque l'opération tactile accidentelle est l'événement tactile d'écran ; ou d'exécution, par le terminal, d'une instruction d'opération correspondant à l'événement tactile d'écran lorsque l'opération tactile accidentelle est l'événement tactile de touche.

2. Procédé selon la revendication 1, dans lequel lorsque la séquence d'occurrence est que l'événement tactile d'écran se produit avant l'événement tactile de touche, et que le geste tactile dans l'événement tactile d'écran est un geste de glissement, la détermination, par le terminal, de l'un parmi l'événement tactile d'écran et l'événement tactile de touche comme étant l'opération tactile accidentelle comprend :
la détermination, par le terminal, du point tactile compris dans la zone tactile accidentelle dans l'événement tactile d'écran dans un temps prédéfini avant que l'événement tactile de touche ne se produise, dans lequel la zone tactile accidentelle est une zone qui est comprise dans l'écran tactile et qui est en avance disposée à proximité d'un bord latéral de la touche cible ; et
la détermination, par le terminal, de l'événement tactile de touche comme étant l'opération tactile accidentelle.

3. Procédé selon la revendication 2, dans lequel la détermination, par le terminal, de l'événement tactile de touche comme étant l'opération tactile accidentelle comprend :
la détermination, par le terminal, d'une première différence de temps entre un moment où le point tactile dans l'événement tactile d'écran quitte l'écran tactile et un moment où le point tactile dans l'événement tactile de touche entre dans la touche cible ; et
la détermination, par le terminal, de l'événement tactile de touche comme étant l'opération tactile accidentelle lorsque la première différence de temps est inférieure à un seuil temporel prédéfini.

4. Procédé selon la revendication 1, dans lequel lorsque la séquence d'occurrence est que l'événement tactile d'écran se produit avant l'événement tactile de touche, et que le geste tactile dans l'événement tactile d'écran n'est pas un geste de glissement, la détermination, par le terminal, de l'un parmi l'événement tactile d'écran et l'événement tactile de touche comme étant l'opération tactile accidentelle comprend :
la détermination, par le terminal, de l'événement tactile de touche comme étant l'opération tactile accidentelle.

5. Procédé selon la revendication 4, dans lequel la détermination, par le terminal, de l'événement tactile de touche comme étant l'opération tactile accidentelle comprend :
la détermination, par le terminal, d'une première distance entre la position tactile du point tactile dans l'événement tactile d'écran et un bord latéral cible de l'écran tactile, dans lequel le bord latéral cible est un bord latéral qui est de l'écran tactile et qui est proche de la touche cible ; et
la détermination, par le terminal, de l'événement tactile de touche comme étant l'opération tactile accidentelle lorsque la première distance est supérieure à un premier seuil de distance.

6. Procédé selon la revendication 4 ou 5, dans lequel la détermination, par le terminal, de l'événement tactile de touche comme étant l'opération tactile accidentelle comprend :
la détermination, par le terminal, d'une deuxième distance entre la position tactile du point tactile dans l'événement tactile de touche et un centre de la touche cible ; et
la détermination, par le terminal, de l'événement tactile de touche comme étant l'opération tactile accidentelle lorsque la deuxième distance est supérieure à un deuxième seuil de distance.

7. Procédé selon la revendication 1, dans lequel lorsque la séquence d'occurrence est que l'événement tactile de touche se produit avant l'événement tactile d'écran, le geste tactile dans l'événement tactile de touche est un geste de glissement dans une direction cible, et la direction cible est une direction allant d'un haut du terminal vers un bas du terminal, la détermination, par le terminal, de l'un parmi l'événement tactile d'écran et l'événement tactile de touche comme étant l'opération tactile accidentelle comprend :
la détermination, par le terminal, de l'événement tactile de touche comme étant l'opération tactile accidentelle.

8. Procédé selon la revendication 7, dans lequel la détermination, par le terminal, de l'événement tactile de touche comme étant l'opération tactile accidentelle comprend :
la détermination, par le terminal, d'une seconde différence de temps entre un moment où le point tactile dans l'événement tactile de touche quitte la touche cible et un moment où le point tactile dans l'événement tactile d'écran entre dans l'écran tactile ; et
la détermination, par le terminal, de l'événement tactile de touche comme étant l'opération tactile accidentelle lorsque la seconde différence de temps est inférieure à un seuil temporel prédéfini.

9. Procédé selon la revendication 1, dans lequel lorsque la séquence d'occurrence est que l'événement tactile de touche se produit avant l'événement tactile d'écran, et que le geste tactile dans l'événement tactile de touche n'est pas un geste de glissement dans une direction cible, la détermination, par le terminal, de l'un parmi l'événement tactile d'écran et l'événement tactile de touche comme étant l'opération tactile accidentelle comprend :
la détermination, par le terminal, de l'événement tactile d'écran comme étant l'opération tactile accidentelle.

10. Procédé selon la revendication 9, dans lequel la détermination, par le terminal, de l'un parmi l'événement tactile d'écran et l'événement tactile de touche comme étant l'opération tactile accidentelle comprend :
la détermination, par le terminal, d'une troisième distance entre la position tactile du point tactile dans l'événement tactile d'écran et un bord latéral cible de l'écran tactile, dans lequel le bord latéral cible est un bord latéral qui est de l'écran tactile et qui est proche de la touche cible ; et
la détermination, par le terminal, de l'événement tactile d'écran comme étant l'opération tactile accidentelle si la troisième distance est inférieure à un troisième seuil de distance.

11. Procédé selon la revendication 9 ou 10, dans lequel la détermination, par le terminal, de l'un parmi l'événement tactile d'écran et l'événement tactile de touche comme étant l'opération tactile accidentelle comprend :
la détermination, par le terminal, d'une quatrième distance entre la position tactile du point tactile dans l'événement tactile de touche et un centre de la touche cible ; et
la détermination, par le terminal, de l'événement tactile d'écran comme étant l'opération tactile accidentelle si la quatrième distance est inférieure à un quatrième seuil de distance.

12. Procédé selon l'une quelconque des revendications 9 à 11, dans lequel après la détermination, par le terminal, de l'événement tactile d'écran comme étant l'opération tactile accidentelle, le procédé comprend également :
la poursuite de la détection, par le terminal, d'un événement tactile d'écran d'un doigt d'un utilisateur sur l'écran tactile ; et
la réponse, par le terminal, à l'événement tactile d'écran lorsqu'un déplacement de mouvement d'un point tactile dans l'événement tactile d'écran satisfait à une condition prédéfinie.

13. Terminal mobile comprenant un module de stockage (1301), un module de traitement (1302) et un module de communication (1303) ; dans lequel le module de traitement est configuré pour commander et gérer une action du terminal ; le module de communication est configuré pour aider le terminal à communiquer avec une autre entité de réseau ; et le module de stockage est configuré pour stocker un code de programme et des données du terminal ; dans lequel le code de programme comprend un ensemble d'instructions qui, lorsqu'elles sont exécutées par le module de traitement, amènent le terminal à réaliser un procédé selon l'une quelconque des revendications 1 à 12.

14. Produit-programme informatique stockant un code de programme qui comprend un ensemble d'instructions qui, lorsqu'elles sont exécutées par un terminal mobile, amènent le terminal à réaliser un procédé selon l'une quelconque des revendications 1 à 12.
